## Europäisches Patentamt

## European Patent Office

## Office européen des brevets

(19)

(11) Veröffentlichungsnummer: **0 258 714**
**B1**

(12) # EUROPÄISCHE PATENTSCHRIFT

(45) Veröffentlichungstag der Patentschrift:
13.06.90

(51) Int. Cl.⁵: **H02G 3/04**

(21) Anmeldenummer: **87111810.5**

(22) Anmeldetag: **14.08.87**

(54) **Profilstab.**

(30) Priorität: **29.08.86 DE 3629369**

(43) Veröffentlichungstag der Anmeldung:
**09.03.88 Patentblatt 88/10**

(45) Bekanntmachung des Hinweises auf die Patenterteilung:
**13.06.90 Patentblatt 90/24**

(84) Benannte Vertragsstaaten:
**AT BE CH DE FR GB IT LI LU NL SE**

(56) Entgegenhaltungen:
**EP-A- 0 136 431**
**CH-A- 492 323**
**DE-C- 508 806**
**US-A- 1 668 953**
**US-A- 3 471 629**

(73) Patentinhaber: **Rixen, Wolfgang, Dipl.-Ing.,
Friedenstrasse 107-109, D-5650 Solingen(DE)**
Patentinhaber: **Pies, Gerrit, Friedenstrasse 107-109,
D-5650 Solingen(DE)**

(72) Erfinder: **Rixen, Wolfgang, Dipl.-Ing.,
Friedenstrasse 107-109, D-5650 Solingen(DE)**
Erfinder: **Pies, Gerrit, Friedenstrasse 107-109,
D-5650 Solingen(DE)**

(74) Vertreter: **Sturies, Herbert et al, Patentanwälte Dr. Ing.
Dipl. Phys. Herbert Sturies Dipl. Ing. Peter Eichler
Postfach 20 12 42, D-5600 Wuppertal 2(DE)**

## Beschreibung

Die Erfindung bezieht sich auf einen Profilstab, insbesondere Leichtmetallstab, der in einer Außenfläche mindestens eine hinterschnittene Längsnut aufweist, in der eine einteilige U-förmige, nach außen weisende Schenkel aufweisende Halteleiste angeordnet ist, die ein stabparalleles Einsteckteil umklammert.

Ein derartiger Profilstab ist aus der DE-A 33 28 142 bekannt. Er dient im Zusammenwirken mit anderen, gleich oder ähnlich profilierten Profilstäben zur Erstellung eines Gestells oder dergleichen und seine Halteleiste wird entweder so eingesetzt, daß ihr Boden bündig mit der Außenfläche des Profilstabs abschließt, um dessen Längsnut zu verkleiden, oder die umgekehrt, mit dem U-Boden voran in die Längsnut eingesetzt wird, um mit ihren Schenkeln einen Aufnahmeraum für das stabparallele Einsteckteil zu bilden, das beispielsweise eine Platte ist, wenn der Profilstab zur Erstellung von Raumtrennwänden herangezogen wird.

Demgegenüber liegt der Erfindung die Aufgabe zugrunde, einen Profilstab der eingangs genannten Art und seine Halteleiste so zu verbessern, daß er als Längsführungselement für längszuführende Werkzeugschlitten, Steuereinheiten oder dergleichen zu verwenden ist.

Diese Aufgabe wird dadurch gelöst, daß die Schenkel der Halteleiste über die Außenfläche des Profilstabs vorspringende Klemmleisten haben, zwischen denen eine mit einer Längslauffläche versehene Stange als Einsteckteil kraft- und/oder formschlüssig festgelegt ist.

Erfindungsgemäß wird die Halteleste so ausgestaltet, daß sie die zur Längsführung mit einer Längslauffläche versehene Stange in jeder Richtung am Profilstab festlegt, ohne daß der Profilstab dazu besonders ausgebildet werden muß. Es genügt vielmehr die Verwendung eines Profilstabs, dessen Querschnitt darauf abgestimmt ist, daß mit weiteren solchen Profilstäben Gestelle errichtet werden, beispielsweise gemäß DE-A 33 28 142. Die Halteleiste ermöglicht es also, die an sich bekannten und für andere Zwecke vorgesehenen Profilstäbe auch dafür verwenden zu können, in einfacher Weise Längsführungen zu erstellen. Dadurch wird die Einsetzbarkeit der bekannten Profilstäbe wesentlich verbessert, zumal gerade z. B. an aus solchen Profilstäben errichteten Gestellen bewegliche Geräte anzuordnen sind, die bei ihren Bewegungen längsgeführt werden müssen.

Eine wesentliche Anpassungsaufgabe leisten die an der Halteleiste vorhandenen vorspringenden Klemmleisten. Mit diesen Klemmleisten ist es möglich, das Profil der Halteleiste an das Profil der die Längslauffläche aufweisenden Stange anzupassen. Mit den vorspringenden Klemmleisten können also beispielsweise Rundstabprofile festgelegt werden, also z. B. sogenannte Wellen, oder anderweitig profilierte Stangen, die beispielsweise ein Fußteil zum Festlegen sowie ein davon besonderes profiliertes Kopfteil haben, dessen Profilierung an die auf der Längslauffläche längsbeweglichen Elemente abgestimmt ist.

Je nach den Anforderungen wird die von der Halteleiste festzulegende Stange kraft- und/oder formschlüssig festgelegt. Einfaches Einklemmen zwischen parallelen Flächen genügt beispielsweise bei geringen und hauptsächlich vertikal zum Profilstab erfolgenden Beanspruchungen durch das längslaufende Bauteil, sowie bei geringer Verschmutzungsgefahr oder bei geringer Belastung. Ein formschlüssiges Festlegen ist hingegen angezeigt, wenn hohe und schräg zum Profilstab erfolgende, insbesondere Querbelastungen auftreten.

In Ausgestaltung der Erfindung ist die Stange ein aus Stahl bestehendes, eine Längsführung für Wälz- oder Gleitelemente bildendes Rundprofil oder weist ein solches Rundprofil auf. Solche als sogenannte Wellen bezeichnenden Rundprofile sind insbesondere gehärtet und für hohe und langzeitige Beanspruchungen durch das auf seiner Längslauffläche längsbewegliche Bauteil bestimmt. Sie bilden durch ihre Profilierung in der Regel zugleich eine Längsführung, z. B. für Rollen, die an ihrem Außenumfang eine teilkreisförmige Laufrille aufweisen und mit dieser quer zu der Stange längsgeführt sind. Wenn die Stange ein mit besonderem Fuß versehenes Rundprofil aufweist, kann sie beispielsweise auch für die bekannten offenen Kugelbüchsen verwendet werden. Statt der auf der Stange längslaufenden Wälzelemente können aber auch Gleitelemente verwendet werden, z. B. Gleitschuhe oder Gleitbüchsen, wenn dies der Einbaufall erfordert. In jedem Fall können die herkömmlichen Stangen mit den erfindungsgemäß ausgebildeten Halteleisten auch an den bekannten Profilstäben verwendet werden.

Die Klemmleisten der Halteleiste sind L-förmig und schließen außerhalb der Enden der U-Schenkel einen in der Breite vergrößerten Aufnahmeraum für das Einsteckteil zwischen sich ein. Diese speziellen Klemmleisten ermöglichen es also, Einsteckteile beliebigen, insbesondere im Durchmesser vergrößerten Profils zwischen sich aufzunehmen und am Profilstab festzulegen. Mit Hilfe solcher Klemmleisten der Halteleisten ist es möglich, Einsteckteile unterschiedlicher Profile und Größen zu verwenden, um auf diese Weise normierte bzw. standardierte Profilstäbe zu verwenden, die im Rahmen eines Baukastensystems aufeinander abgestimmt sind, und mit denen das Baukastensystem durch Einsteckteile erweitert wird, die ihrerseits wiederum normiert sind, beispielsweise als Längsführungen in Rundprofilform.

Die Halteleiste ist von dem Einsteckteil spreizbar und mit seinen U-Schenkeln am Profilstab verklemmbar. Das Verklemmen der Halteleiste am Profilstab ist besonders dann vorteilhaft, wenn keine sonstigen Mittel vorhanden sind, um die Halteleiste am Profilstab in Längsrichtung festzulegen. Das Verklemmen kann aber auch genügen, um die Halteleiste quer, also gegen Herausziehen aus der Längsnut des Profilstabs zu sichern. Das ist dann erforderlich, wenn die U-Schenkel keine Rastvorsprünge aufweisen, welche in die Hinterschneidungen der Längsnut einrasten und die Halteleiste auf diese Weise gegen Herausziehen aus der Längsnut sichern. Wenn Halteleiste und Einsteckteil so aufeinander abgestimmt sind, daß die Halteleiste von dem Einsteckteil gespreizt wird, so ist dadurch zugleich auch dessen in Längsrichtung fester Sitz zu erreichen, der auch radial spielfrei ist.

Die Halteleiste ist von ihrem U-Boden bis zu den Außenenden ihrer Klemmleisten offen, die bei zwischen sie eingebautem Einsteckteil in Einsteckrichtung auf den Profilstab abgestimmt sind. Diese Ausgestaltung gewährleistet eine optimale Spreizbarkeit der Klemmleisten, insbesondere bei deren Ausbildung aus Metall, und zwar zum Verklemmen der Halteleiste an dem Profilstab und zum Einklemmen des Einsteckteils. Die Abstützung der Klemmleisten auf dem Profilstab bewirkt eine geringe Verformbarkeit der Halteleisten in Einsteckrichtung und damit eine sichere Kraftübertragung vom Einsteckteil auf den Profilstab.

Die Klemmleisten weisen an ihrem zur Einsteckrichtung des Einsteckteils vertikalen Klemmsteg eine das Einsteckteil abstützende Stützrippe auf, um auf das Einsteckteil einwirkende Kräfte auf kürzestem Wege und ohne Einflußnahme auf die die Klemmung des Einsteckteils bewirkende Abschnitte der Klemmleisten auf den Profilstab übertragen zu können.

Die Klemmleisten weisen an ihren äußeren Enden zueinander gewendete, eine Rastklemmstelle bildende Haltelippen auf. Diese Haltelippen sind an die Querschnittsgestaltung des Einsteckteils anpaßbar und sichern einen Formschluß mit dem Einsteckteil, so daß dieses und die Halteleiste besonders sicher gegen Querbeanspruchungen zusammengebaut sind.

Der Profilstab weist an derselben oder an zwei einander gegenüberliegenden Außenflächen je eine von einer Halteleiste festgelegte Stange auf, so daß übliche Linearführungssysteme mit Doppellaufbahn durch normalisierte bzw. standardisierte Bauteile erstellt werden können, auch solche mit Übereinanderanordnung der Längslaufflächen.

Die Erfindung wird anhand eines in der Zeichnung dargestellten Ausführungsbeispiels erläutert. Es zeigt:

Fig. 1 bis 4 Querschnitte durch einen Profilstab mit einer Halteleiste, in die ein Rundprofil in Einsteckrichtung schrittweise tiefer bis in die endgültige Einbaulage eingebaut wird,

Fig. 5 einen Teilquerschnitt einer in eine Hinterschneidung eines Profilstabs eingesetzten Halteleiste ohne Einsteckteil,

Fig 6 eine der Fig. 5 ähnliche Darstellung zur Veranschaulichung des Einsteckvorganges und

Fig. 7 ein mit den Bauteilen der Erfindung aufgebautes Längsführungssystem.

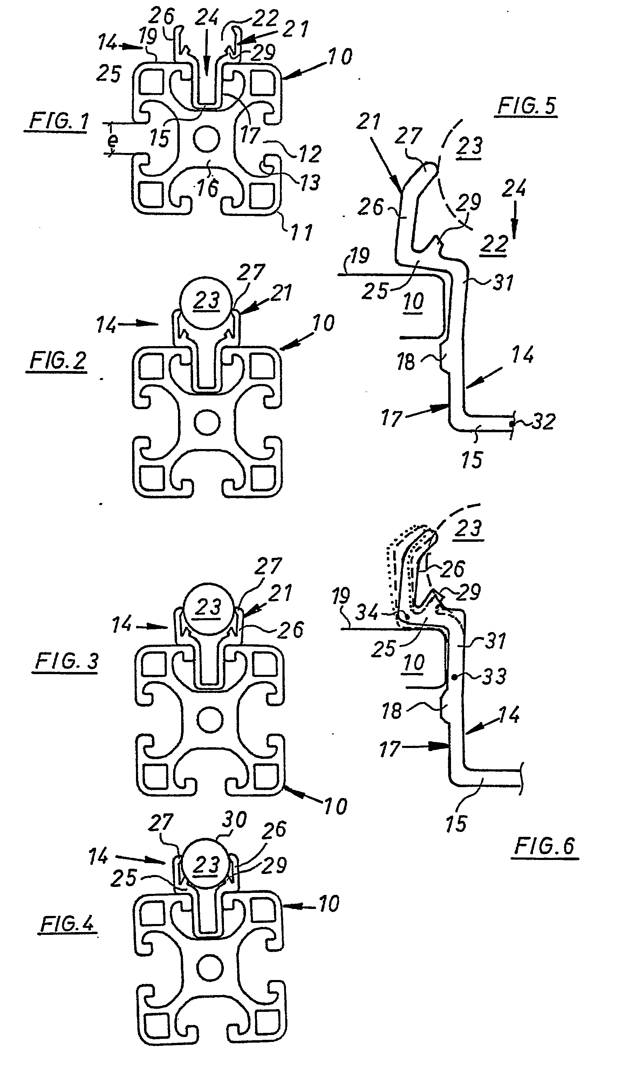

Der in Fig. 1 dargestellte Profilstab 10 hat einen quadratischen Querschnitt mit abgerundeten Ecken 11 und Hinterschneidungen 13 aufweisenden Längsnuten 12, in deren obere eine Halteleiste 14 eingesteckt ist.

Die Halteleiste 14 ist in ihrem in die Längsnut 12 eingesetzten Bereich U-förmig ausgebildet. Ihr Boden 15 ist dem Profilkern 16 benachbart und die U-Schenkel 17 weisen nach außen. Die U-Schenkel 17 haben gemäß Fig. 5 längs mit ihnen durchlaufende Sicherungsrippen 18, die dafür sorgen, daß die vertikal eingesteckte Halteleiste 14 nicht ungewolltweise wieder aus der Längsnut 12 herausrutscht. Die Sicherungsrippen 18 sind hinsichtlich der Eingangsbreite e der Längsnut 12 so dimensioniert, daß sie nach Art einer Rastverbindung wirken, also zu einem kurzzeitigen Zusammendrücken der U-Schenkel 17 führen, wenn die Halteleiste 14 in Einsteckrichtung 24 eingebaut wird. Fig. 5 läßt erkennen, daß die Halteleiste 14 im übrigen so ausgebildet ist, daß die Sicherungsrippen 18 die Halteleiste 14 nicht am Profilstab 10 in dessen Längsrichtung festlegen, so daß die Halteleiste 14 auch in Längsrichtung in die Längsnut 12 eingeschoben werden kann bzw. nach einem Einstecken in Einsteckrichtung 24 eine Korrektur ihrer Längsanordnung möglich ist.

Die Halteleiste 14 hat über die Außenfläche 19 des Profilstabs 10 vorspringende Klemmleisten 21, die an den Enden der U-Schenkel 17 befestigt sind. Die Klemmleisten 21 sind L-förmig ausgebildet und schließen zwischen sich einen verbreiterten Aufnahmeraum 22 für ein Einsteckteil 23 ein. Jede Klemmleiste 21 hat einen kurzen Steg 25, der im wesentlichen parallel zur Außenfläche 19 und vom zügehörigen U-Schenkel 17 von der Längsnut 12 wegverläuft, sowie einen zu dem kurzen Steg 25 senkrechten Klemmsteg 26. Die Klemmleisten 21 bzw. ihre vertikalen Klemmstege 26 haben an ihren äußeren Enden einander zugewendete Haltelippen 27, welche ein entsprechend gestaltetes Einsteckteil 23 bei entsprechender Länge ihrer Klemmstege 26 hintergreifen können. Die kurzen Stege 25 weisen jeweils eine schräg nach innen gerichtete Stützrippe 29 auf, der sich das Einsteckteil 23 abzustützen vermag.

Die Figuren 2 bis 4 zeigen, daß das Einsteckteil 23 eine als Rundprofil ausgebildete Stange ist, die dem Profilstab 10 stabparallel angeordnet ist, wie auch die Halteleiste 14. Zum Einbau des Einsteckteils 23 in den Aufnahmeraum 22 der Halteleiste 14 wird das Einsteckteil 23 gemäß Fig. 2 zunächst auf die Haltelippen 27 der Klemmleisten 21 gelegt, was Fig. 2 zeigt. Fig. 3 zeigt demgegenüber, daß das Einsteckteil 23 so weit in den Aufnahmeraum 22 zwischen die Klemmleisten 21 hineingedrückt ist, daß deren Klemmstege 26 so weit wie nötig nach außen gespreizt sind. Fig. 4 zeigt im Vergleich dazu das vollständig in den Aufnahmeraum 22 hineingesteckte Einsteckteil 23, welches von den Haltelippen 27 der Klemmstege 26 hintergriffen wird und auf den Stützrippen 29 der kurzen Stege 25 aufsitzt. Die außerhalb der Haltelippen 27 frei zugänglichen Bereiche des Einsteckteils 23 bilden Längslaufflächen 30, und die von Belastungen dieser Längslaufflächen 30 herrührenden Belastungen des Einsteckteils 23 werden über die Stützrippen 29 und die kurzen Stege 25 auf kurzem Weg auf den Profilstab 10 übertragen, ohne das die Klemmstege 26 nennenswert beansprucht werden müssen. Denn die Stützrippen 29 nehmen nicht nur in Einsteckrichtung 24 erfolgende Belastungen auf, sondern auch Querlasten, so daß die Klemmstege 21 lediglich m Hinblick auf diejenigen Belastungen dimensioniert werden müssen, die sich beim Einstecken des Einsteckteils 23, bei dessen Halterung und zum Verklemmen der Halteleiste 14 im Profilstab 10 ergeben.

Anhand der Figuren 5 und 6 werden der Einsteckvorgang des Einsteckteils 23 und die sich daraus ergebenen Verformungen der Halteleiste 14 erläutert. Aus der in Fig. 5 dargestellten einen Hälfte des Profils der Halteleiste 14 ist ersichtlich, daß die oberen Enden 31 der U-Schenkel 17 geringfügig gegeneinander geneigt angeordnet sind, und daß dementsprechend die kurzen Stege 25 nicht prallel zur Außenfläche 19 des Profilstabes 10 verlaufen, sondern geringfügig aus der Horizontalen nach oben geneigt. Infolgedessen ergeben sich entsprechende Abstände des oberen Endes 31 und dessen kurzen Steges 25 von den benachbarten Profilstabflächen. Diese Abstände lassen entsprechende Auslenkungen der Halteleiste 14 beim Einstecken des Einsteckteils 23 zu. Wird das Einsteckteil 23 gemäß Fig. 5 angeordnet und in Einsteckrichtung 24 beaufschlagt, so erfolgt zunächst eine Verformung des Profils um eine neutrale Achse 32, bis die U-Schenkel 17 am Profilstab 10 anliegen, so daß sich die aus Fig. 6 ersichtliche Biegeachse 33 ergibt und bei weiterem Einstecken das obere Ende 31 des U-Schenkels 17 am Profilstab 10 verklemmt und die Halteleiste 14 damit längs festgelegt wird. Bei weiterem Einstecken des Einsteckteils 23 kommt der kurze Steg 25 zur Auflage auf der Außenfläche 19 des Profilstabs 10. Von da ab liegt die Halteleiste 14 derart auf dem Profilstab 10, daß sich für die Klemmleisten 26 je eine Drehachse 34 ergibt, so daß die Klemmleisten 26 bei weiterem Einstecken des Einsteckteils 23 zunächst in ihre am weitestens gespreizte, gepunktet dargestellte Lage gelangen, die der Fig. 3 entspricht, bis das Einsteckteil 23 auf den Stützrippen 29 aufliegt und von den Haltelippen 27 hintergriffen wird. Dann nehmen die Klemmleisten 26 die gestrichelte, in Fig. 6 mittlere Lage ein, welche der Fig. 4 entspricht.

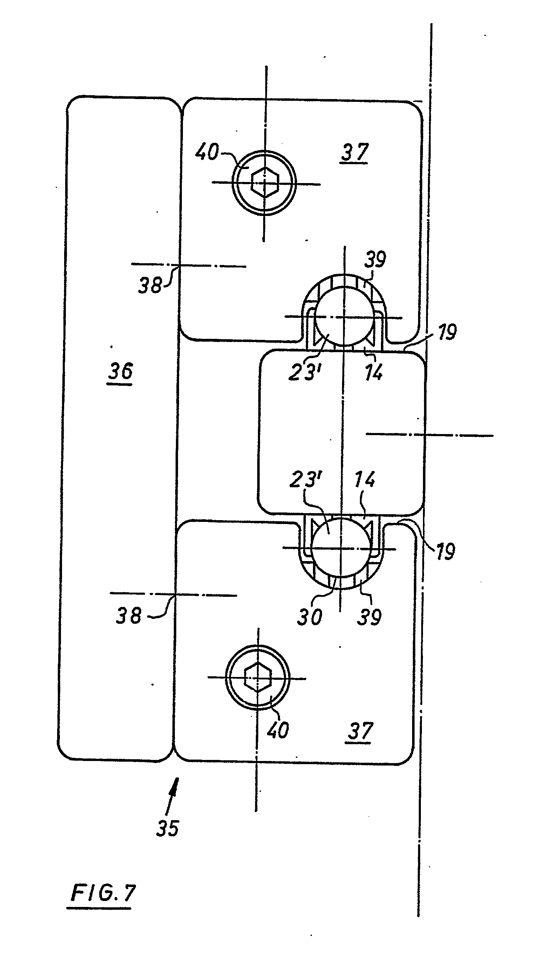

Fig. 7 zeigt einen Querschnitt durch einen horizontalen Profilstab 10 mit oberhalb und unterhalb angeordneten Halteleisten 14 zur Halterung einer Stange bzw. Welle 23' zur Lagerung eines Linearführungssystems 35. Dieses besteht aus einem Tragprofil 36, an dem zwei Rollenhälteprofile 37 angeordnet und an den Stellen 38 befestigt sind. Jedes Rollenhalteprofil 37 lagert eine Rolle 39, wobei die gesamte Lage des Linearführungssystems 35 relativ zum Profilstab 10 und insbesondere die Lage der Rollen 39 mit Einstellschrauben 40 einstellbar ist. Die Längslaufflächen 30 der Stangen 23' dienen daher der Längsführung der Rollen 39, sind also in der Lage, aus dem Linearführungssystem 35 herrührende Querkräfte aufzunehmen und auf den Profilstab 10 zu übertragen.

## Patentansprüche

1. Profilstab (10), insbesondere Leichtmetallstab, der in einer Außenfläche (19) mindestens eine hinterschnittene Längsnut (12) aufweist, in der eine einteilige U-förmige, nach außen weisende Schenkel (17) aufweisende Halteleiste (14) angeordnet ist, die ein stabparalleles Einsteckteil (23) umklammert, **dadurch gekennzeichnet**, daß die Schenkel (17) der Halteleiste (14) über die Außenfläche (19) des Profilstabs (10) vorspringende Klemmleisten (21) haben, zwischen denen eine mit einer Längslauffläche (30) versehene Stange als Einsteckteil (23) kraft- und/oder formschlüssig festgelegt ist.

2. Profilstab nach Anspruch 1, **dadurch gekennzeichnet**, daß die Stange (23') ein aus Stahl bestehendes, eine Längsführung für Wälzoder Gleitelemente (z. B. Rollen (39)) bildendes Rundprofil ist oder aufweist.

3. Profilstab nach Anspruch 1 oder 2, **dadurch gekennzeichnet**, daß die Klemmleisten (21) der Halteleiste (14) L-förmig sind und außerhalb der Enden (31) der U-Schenkel (17) einen in der Breite vergrößerten Aufnahmeraum (22) für das Einsteckteil (23) zwischen sich einschließen.

4. Profilstab nach einem der Ansprüche 1 bis 3, **dadurch gekennzeichnet**, daß die Halteleiste (14) von dem Einsteckteil (23) spreizbar und mit seinen U-Schenkeln (17) am Profilstab (10) verklemmbar ist.

5. Profilstab nach einem der Ansprüche 1 bis 4, **dadurch gekennzeichnet**, daß die Halteleiste (14) von ihrem U-Boden (15) bis zu den Außenenden ihrer Klemmleisten (21) offen ist, die bei zwischen sie eingebautem Einsteckteil (23) in Einsteckrichtung (24) auf dem Profilstab (10) abgestützt sind.

6. Profilstab nach einem der Ansprüche 1 bis 5, **dadurch gekennzeichnet**, daß die Klemmleisten (21) an ihrem zur Einsteckrichtung (24) des Einsteckteils (23) vertikalen Klemmsteg (25) eine das Einsteckteil (23) abstützende Stützrippe (29) aufweisen.

7. Profilstab nach einem der Ansprüche 1 bis 6, **dadurch gekennzeichnet**, daß die Klemmleisten (21) an ihren äußeren Enden zueinander gewendete, eine Rastklemmstelle bildende Haltelippen (27) aufweisen.

8. Profilstab nach einem der Ansprüche 1 bis 7, **dadurch gekennzeichnet**, daß er an derselben oder an zwei einander gegenüberliegenden Außenflächen (19) je eine von einer Halteleiste (14) festgelegte Stange (23') aufweist.

## Claims

1. Profiled bar (10), particularly light metal bar, which has in an external surface (19) at least one undercut longitudinal groove (12) in which a one-part, U-shaped retaining strip (14) having outwardly extending legs (17) is arranged and which clamps around a push-in element (23) which is parallel to the bar, characterised in that the legs (17) of the retaining strip (14) have gripping arms (21) projecting beyond the external surface (19) of the profiled bar (10), between which gripping arms a rod formed as a push-in element (23) and provided with a longitudinal running surface (30) is secured in position in a force-fitting and/or shape-fitting manner.

2. Profiled bar according to claim 1, characterised in that the rod (23') is or comprises a steel circular cross-section member defining a longitudinal guide for rolling or sliding elements (e.g. rollers (39)).

3. Profiled bar according to claim 1 or 2, characterised in that the gripping arms (21) of the retaining strip (14) are L-shaped and, externally of the ends (31) of the U-shaped legs (17), define therebetween a receiving space (22) for the push-in element (23) which is larger in width than the space between the legs.

4. Profiled bar according to one of claims 1 to 3, characterised in that the retaining strip (14) is spreadable by the push-in element (23) and can be held fast against the profiled bar (10) by its U-shaped legs (17).

5. Profiled bar according to one of claims 1 to 4, characterised in that the retaining strip (14) is open from its base (15) up to the outer ends of its gripping arms (21), with the gripping arms being supported against the profiled bar (10) upon insertion of the push-in element (23) between the gripping arms in the direction of insertion (24).

6. Profiled bar according to one of claims 1 to 5, characterised in that the gripping arms (21) have a supporting rib (29) for supporting the push-in element (23) on each of their stem portions (25) which are perpendicular to the direction of insertion (24) of the push-in element (23).

7. Profiled bar according to one of claims 1 to 6, characterised in that the gripping arms (21) have retaining lips (27) forming a latching clamping means at their outer ends and turned towards each other.

8. Profiled bar according to one of claims 1 to 7, characterised in that it includes either on itself or on each of two oppositely facing external surfaces (19) a rod (23') held in position by a retaining strip (14).

**Revendications**

1. Barre profilée (10), en particulier barre en métal léger, présentant dans une surface extérieure (19) au moins une rainure longitudinale en contre-dépouille (12) dans laquelle est disposée une barrette de retenue d'une seule pièce et en forme de U (14) qui présente des ailes (17) dirigées vers l'extérieur et qui enserre une pièce enfichable (23) parallèle à la barre, caractérisée en ce que les ailes (17) de la barrette de retenue (14) comportent des branches de serrage (21) faisant saillie au-delà de la surface extérieure (19) de la barre profilée (10) et entre lesquelles est bloquée, sous l'action d'une force et/ou par complémentarité de forme, en tant que pièce enfichable (23), une tige pourvue d'une piste longitudinale (30).

2. Barre profilée selon la revendication 1, caractérisée en ce que la tige (23') est ou comporte un profilé rond en acier formant un guidage longitudinal pour des éléments de roulement ou de glissement (par exemple des galets (39)).

3. Barre profilée selon la revendication 1 ou 2, caractérisée en ce que les branches de serrage (21) de la barrette de retenue (14) sont en forme de L et délimitent entre elles, à l'extérieur des extrémités (31) des ailes en U (17), un espace de réception agrandi en largeur (22), pour la pièce enfichable (23).

4. Barre profilée selon l'une des revendications 1 à 3, caractérisée en ce que la barrette de retenue (14) peut être élargie sous l'action de la pièce enfichable (23) et coincée par ses ailes en U (17) contre la barre profilée (10).

5. Barre profilée selon l'une des revendications 1 à 4, caractérisée en ce que la barrette de retenue (14) est ouverte depuis son fond en U (15) jusqu'aux extrémités extérieures de ses branches de serrage (21) qui, lorsque la pièce enfichable (23) est encastrée entre elles, s'appuient dans le sens de l'enfichage (24) sur la barre profilée (10).

6. Barre profilée selon l'une des revendications 1 à 5, caractérisée en ce que les branches de serrage (21) présentent, sur leur tronçon de serrage (25) disposé verticalement par rapport à la direction d'enfichage (24) de la pièce enfichable (23), une nervure d'appui (29) supportant la pièce enfichable (23).

7. Barre profilée selon l'une des revendications 1 à 6, caractérisée en ce que les branches de serrage (21) présentent, à leurs extrémités extérieures, des lèvres de retenue (27) orientées l'une vers l'autre et formant une position de serrage par encliquetage.

8. Barre profilée selon l'une quelconque des revendications 1 à 7, caractérisée en ce que sur la même surface extérieure, ou sur deux surfaces extérieures opposées l'une à l'autre (19), elle présente à chaque fois une tige (23') bloquée par une barrette de retenue (14).

FIG.1

FIG.2

FIG.3

FIG.4

FIG.5

FIG.6

*FIG. 7*